# EUROPEAN PATENT APPLICATION

(11) **EP 4 773 411 A1**
(43) Date of publication of application: **08.07.2026**
(21) Application number: 25857265.0
(22) Date of filing: 07.08.2025
(51) Int. Cl.: H01M 50/533, H01M 50/536, H01M 50/55, H01M 50/204

(54) **SECONDARY BATTERY AND BATTERY PACK COMPRISING SAME**

(30) Priority: 21.08.2024 KR 20240111982
(71) Applicant: LG Energy Solution, Ltd., Seoul 07335 (KR)
(72) Inventor: LEE, Ji Sun, Daejeon 34122 (KR); HWANG, Ji Young, Daejeon 34122 (KR); KIM, Sang Hun, Daejeon 34122 (KR); LEE, Jae Ho, Daejeon 34122 (KR); CHOI, Ji Eun, Daejeon 34122 (KR); LEE, Min Kyu, Daejeon 34122 (KR)
(74) Representative: Hoffmann Eitle
(86) International application number: PCT/KR2025/011937
(87) International publication number: WO 2026/043176

(57) **Abstract**

The present disclosure relates to a secondary battery and a battery pack including the same, and the secondary battery according to an aspect of the present disclosure includes an electrode assembly including a plurality of electrodes and a separator stacked on each other; an electrode tab extending from the electrode; a case accommodating the electrode assembly and having a window in an outer surface; and an electrode lead disposed in the case, wherein at least a part of the electrode lead is exposed through the window to conduct electricity from the electrode assembly to outside, and the electrode lead may include a lead portion extending in a stack direction of the plurality of electrodes at one side of the electrode assembly; and a coupling portion extending from the lead portion and to which the electrode tab is coupled.

## Description

### TECHNICAL FIELD

### CROSS-REFERENCE TO RELATED APPLICATIONS

This application is based on and claims priority from Korean Patent Application No. 10-2024-0111982 filed on August 21, 2024 with the Korean Intellectual Property Office, the disclosure of which is incorporated herein in its entirety by reference.

### TECHNICAL FIELD

The present disclosure relates to a secondary battery and a battery pack including the same, and more particularly, to a secondary battery capable of charging and discharging electrical energy and a battery pack including the same.

### BACKGROUND ART

Secondary batteries have been used in small applications such as mobile devices or laptops, but their research has recently expanded to medium- to large-scale applications. They are being widely used in applications requiring high voltage and large capacity such as energy storage systems (ESSs) or electric vehicles (EVs). Secondary battery cells may be housed and secured within a module housing to form a battery module.

A secondary battery includes an electrode assembly including electrodes and separators stacked on each other, a case accommodating the electrode assembly, and an electrode lead electrically connecting the electrode assembly to an external device. Secondary batteries are classified into cylindrical, pouch-type or prismatic secondary batteries according to the structure or shape of the case.

At least a part of the electrode lead generally extends outward from the case to act as a medium for electricity conduction between the electrode assembly within the case and the external device. The structure of the electrode lead increases the total length of the secondary battery, and reduces the energy density per unit area. To address this drawback, an approach to place the electrode lead within the case may be worked out, but poses a problem with structural stability of the secondary battery.

### DISCLOSURE

### TECHNICAL PROBLEM

The present disclosure is designed to solve the above-described problems, therefore the present disclosure is directed to providing a secondary battery with improved structural stability and a battery pack including the same.

The problems of the present disclosure are not limited to the above-mentioned problems, and these and other problems will be clearly understood by persons having ordinary skill in the technical field pertaining to the present disclosure from the following description.

### TECHNICAL SOLUTION

According to an aspect of the present disclosure, provided is a secondary battery including an electrode assembly including a plurality of electrodes and a separator stacked on each other; an electrode tab extending from the electrode; a case accommodating the electrode assembly and having a window in an outer surface; and an electrode lead disposed in the case, wherein at least a part of the electrode lead is exposed through the window to conduct electricity from the electrode assembly to outside, and wherein the electrode lead includes a lead portion extending in a stack direction of the plurality of electrodes at one side of the electrode assembly; and a coupling portion extending from the lead portion and to which the electrode tab is coupled.

In this instance, the coupling portion may extend at an angle with respect to the lead portion or perpendicularly to the lead portion.

In this instance, the electrode assembly may have a predetermined length in a direction perpendicular to the stack direction, the lead portion may be located at one side of the electrode assembly in a length direction, and the coupling portion may extend in the length direction of the electrode assembly.

In this instance, the coupling portion may extend toward the electrode assembly.

In this instance, an end of the coupling portion may face said one side of the electrode assembly.

In this instance, a length (L) of the coupling portion may be smaller than or equal to a distance (d1) between the lead portion and the electrode assembly, and the electrode tab may include an extension portion extending toward the lead portion; and a corresponding coupling portion present at an end of the extension portion and coupled to the coupling portion.

In this instance, the electrode assembly may include an outer surface present on one side in the stack direction, the outer surface facing outwards, and the coupling portion may extend over the outer surface.

In this instance, at least a part of the coupling portion may overlap the outer surface in the stack direction.

In this instance, a length (L) of the coupling portion may be greater than a distance (d2) between the lead portion and the electrode assembly.

The electrode assembly may include an edge present at said one side in the length direction, and the electrode lead may cover the edge.

In this instance, the electrode tab may include an extension portion extending toward the coupling portion; and a corresponding coupling portion present at an end of the extension portion and coupled to the coupling portion.

In this instance, the corresponding coupling portion may be located between the outer surface and the coupling portion.

In this instance, the extension portion may be located between said one side of the electrode assembly and the lead portion.

In this instance, the extension portion may have a bent shape toward between the outer surface and the coupling portion.

In this instance, one surface of the lead portion may be exposed to outside of the case through the window.

In this instance, the lead portion may have a larger area than the window.

In this instance, the window may have a first height (h1) in the stack direction, the lead portion may have a second height (h2) in the stack direction, and the second height (h2) may be larger than the first height (h1).

In this instance, the window may have a first width (w1) in a direction parallel to a width of the electrode, the lead portion may have a second width (w2) in the direction parallel to the width of the electrode, and the second width (w2) may be larger than the first width (w1).

In this instance, the coupling portion may extend parallel to an inner wall of the case so as to be supported by the inner wall.

According to another aspect of the present disclosure, provided is a battery pack including at least one secondary battery; and a packaging accommodating the secondary battery, wherein the secondary battery includes an electrode tab extending from an electrode; a case accommodating an electrode assembly and having a window in an outer surface; and an electrode lead disposed in the case, wherein at least a part of the electrode lead is exposed through the window to conduct electricity from the electrode assembly to outside, and wherein the electrode lead includes a lead portion extending in a stack direction of the plurality of electrodes at one side of the electrode assembly; and a coupling portion extending from the lead portion and to which the electrode tab is coupled.

### ADVANTAGEOUS EFFECTS

According to an aspect embodiment of the present disclosure, the electrode lead includes the lead portion extending in the stack direction of the electrodes and the coupling portion extending from the lead portion and to which the electrode tab is coupled, in order to stably place the electrode lead within the case, thereby improving the structural stability of the secondary battery.

The effects of the present disclosure are not limited to the above-described effects, and these and other effects will be clearly understood by persons having ordinary skill in the technical field pertaining to the present disclosure from the specification and the accompanying drawings.

### BRIEF DESCRIPTION OF THE DRAWINGS

FIG. 1 is a perspective view of a secondary battery according to an embodiment of the present disclosure when viewed from above.
FIG. 2 is a perspective view of an electrode lead of a secondary battery according to an embodiment of the present disclosure when viewed from above.
FIG. 3 is a cross-sectional view of FIG. 1, taken along the line I-I.
FIG. 4 is a cross-sectional view of a secondary battery according to another embodiment of the present disclosure, taken along the line I-I of FIG. 1.

### BEST MODE

The exemplary embodiments of the present disclosure will be described in sufficient detail to those skilled in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

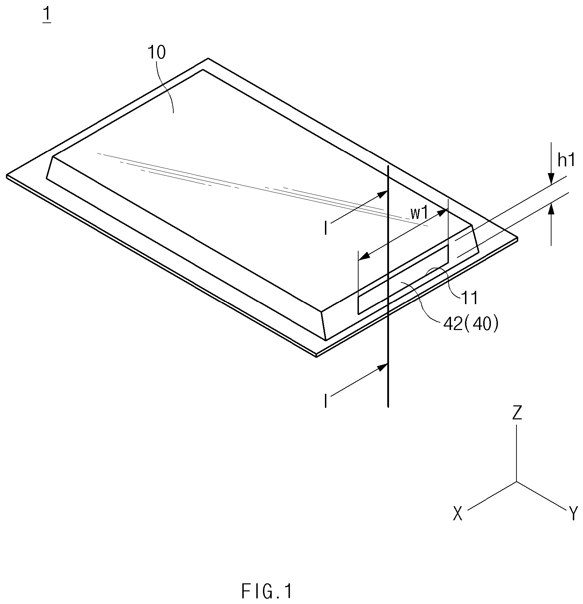

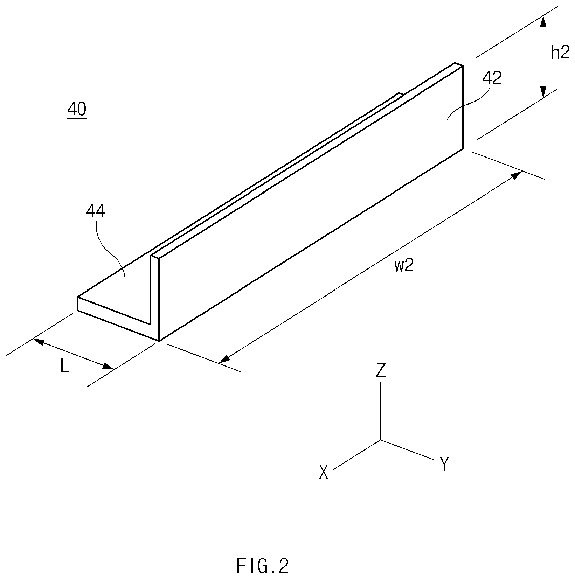

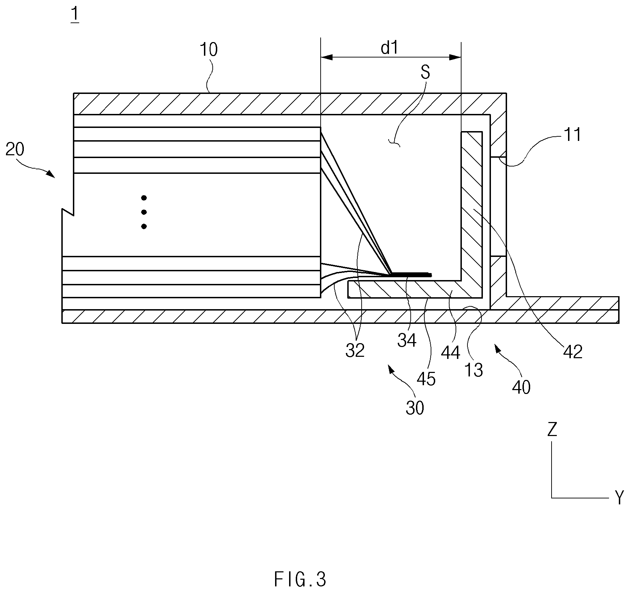

FIG. 1 is a perspective view of a secondary battery according to an embodiment of the present disclosure when viewed from above. FIG. 2 is a perspective view of an electrode lead of the secondary battery according to an embodiment of the present disclosure when viewed from above. FIG. 3 is a cross-sectional view of FIG. 1, taken along the line I-I.

FIGS. 1 to 3 show the secondary battery according to an embodiment of the present disclosure. Referring to FIGS. 1 to 3, the secondary battery 1 according to an embodiment of the present disclosure may be a secondary battery for charging and discharging electrical energy.

In this instance, the secondary battery 1 may include an electrode assembly 20 and a case 10 accommodating the electrode assembly 20. In addition, an electrode lead 40 for electrically connecting the electrode assembly 20 to an external load or power source may be housed in the case 10 together with the electrode assembly 20.

As described above, because the electrode lead of the secondary battery 1 according to an embodiment of the present disclosure does not protrude or extend outward, the size of a space or area occupied by the secondary battery 1 may be minimized. Through this, the secondary battery 1 may have high energy density.

Hereinafter, each component of the secondary battery according to an embodiment of the present disclosure will be described in detail.

Referring to FIGS. 1 to 3, the secondary battery 1 according to an embodiment of the present disclosure may include the case 10. The case 10 may be configured to hold the other components of the secondary battery 1 inside to protect them.

In this embodiment, the case 10 may be a pouch-shaped case having an accommodation space S formed by shaping at least a part of an outer packaging film into a concave cup. However, the case 10 is not limited to a particular shape or material and may have any shape or material for providing the accommodation space S.

As an example, in another embodiment, the case 10 may be made of a metal or plastic material having a predetermined rigidity. As another example, the case 10 may be cylindrical or prismatic in shape. The shape and material of the case 10 may be properly changed as needed.

Meanwhile, in this embodiment, the case 10 may have a window 11. The window 11 may be configured to connect the inside and outside of the case 10. The window 11 may be defined as a space that passes through the case 10. As will be described in detail below, the electrode lead 40 may be exposed to the outside of the case 10 through the window 11.

As shown in the drawings, the window 11 may be rectangular in shape. More specifically, the window 11 may have a first width (w1) having a predetermined length in the width direction of the electrode assembly 20 (X-axis direction) as described below, and a first height (h1) having a predetermined length in the stack direction (or thickness direction) of the electrode assembly 20 (Z-axis direction) as described below. The shape, area or location of the window 11 may be properly changed in view of the shape of the case 10 and the shape or location of the electrode lead 40.

Referring to FIG. 3, the secondary battery 1 according to an embodiment of the present disclosure may include the electrode assembly 20. The electrode assembly 20 may be responsible for the charge and discharge functions. The electrode assembly 20 may be disposed in the accommodation space S of the case 10.

To this end, the electrode assembly 20 may be formed by stacking a plurality of electrodes and a separator. The electrode may be a negative electrode or a positive electrode. The electrode assembly 20 may be classified into a cylindrical type, a stack type or a stack-and-fold type according to the structure or shape. The electrode assembly 20 is not limited to a particular shape or structure.

Meanwhile, in this embodiment, the electrode assembly 20 may have a predetermined length. One side of the electrode assembly 20 in the length direction (Y-axis direction) may face the window 11 of the case 10.

Hereinafter, on the basis of FIGS. 1 and 3, a direction in which the electrode assembly 20 extends is referred to as the length direction (Y-axis direction), a direction in which the electrodes and the separator are stacked (or the thickness direction) is referred to as the stack direction (Z-axis direction), and a direction perpendicular to the length direction and the stack direction (Y-axis direction and Z-axis direction) is referred to as the width direction (X-axis direction).

Here, the length direction (Y-axis direction) and the width direction (X-axis direction) of the electrode assembly 20 may be parallel to the length direction and the width direction of the electrodes or the separator of the electrode assembly 20, respectively.

Meanwhile, the secondary battery 1 according to an embodiment of the present disclosure may include an electrode tab 30. The electrode tab 30 may be configured to conduct electricity from the electrode assembly 20 to the external device together with the electrode lead 40 as described below.

In this embodiment, the electrode tab 30 may extend from each of the plurality of electrodes. The electrode tab 30 may have a film or sheet shape, but the structure or shape of the electrode tabs 30 may be properly changed as needed.

Meanwhile, in this embodiment, the electrode tab 30 may include an extension portion 32. The extension portion 32 may extend from the electrode. In this case, the extension portion 32 may extend toward a lead portion 42 of the electrode lead 40 as described below. Alternatively, the extension portion 32 may extend toward the window 11 of the case 10.

In this instance, in this embodiment, the extension portion 32 may extend at an angle toward a coupling portion 44 of the electrode lead 40 as described below. A corresponding coupling portion 34 may be present at the end of the extension portion 32. The corresponding coupling portion 34 may be coupled to the coupling portion 44 of the electrode lead 40.

In this embodiment, the corresponding coupling portion 34 and the coupling portion 44 may be coupled to each other by a welding process. However, the coupling method or structure of the corresponding coupling portion 34 and the coupling portion 44 is not limited to a particular one and may include any method or structure for electricity conduction between them.

Referring to FIGS. 1 to 3, the secondary battery 1 according to an embodiment of the present disclosure may include the electrode lead 40. The electrode lead 40 may be disposed in the accommodation space S together with the electrode assembly 20.

The electrode lead 40 may be made of a conductive material. The electrode lead 40 may be a metal piece having a predetermined rigidity. Alternatively, the electrode lead 40 may be provided in the form of a film or sheet.

In this instance, at least a part of the electrode lead 40 may be exposed to the outside of the case 10 through the window 11. The electrode lead 40 may be electrically connected to the external load or power source through the exposed part.

Meanwhile, in this embodiment, the electrode lead 40 may include the lead portion 42. A part of the lead portion 42 may be exposed to the outside through the window 11. The lead portion 42 may be located at one side of the electrode assembly 20 in the length direction (Y-axis direction). Describing in another word, the lead portion 42 may be disposed between the electrode assembly 20 and the window 11.

In this embodiment, the lead portion 42 may extend in the stack direction of the electrode assembly 20 (Z-axis direction). This may make sure that the lead portion 42 is sufficiently exposed through the window 11.

In this instance, the lead portion 42 may have a second height (h2) of a predetermined length in the stack direction (Z-axis direction). The second height (h2) may be larger than the first height (h1) of the window 11. This may prevent the lead portion 42 from slipping out of the window 11.

Meanwhile, in this embodiment, the lead portion 42 may extend in the width direction of the electrode assembly 20 (X-axis direction). This may make sure that the lead portion 42 is sufficiently exposed through the window 11.

In this instance, the lead portion 42 may have a second width (w2) of a predetermined length in the width direction (X-axis direction). The second width (w2) may be larger than the first width (w1) of the window 11. This may prevent the lead portion 42 from slipping out of the window 11.

In this embodiment, the lead portion 42 may contact the window 11. This may prevent electrolyte leaks between the lead portion 42 and the window 11. Although FIG. 3 and other drawings show that the lead portion 42 and the window 11 are somewhat spaced apart from each other, this is provided by way of illustration.

Although not shown in the drawings, to achieve the tight contact, a predetermined bonding layer may be provided along the periphery of the window 11 between the window 11 and the lead portion 42. The bonding layer may be formed by melting a resin layer present on the outer surface of the case 10, or may be formed from an adhesive.

Referring back to FIGS. 2 and 3, the electrode lead 40 of the secondary battery 1 according to an embodiment of the present disclosure may include the coupling portion 44. The coupling portion 44 may be configured to improve structural stability of the secondary battery 1.

In this instance, the coupling portion 44 may extend from the lead portion 42 toward the electrode assembly 20. As shown in the drawings, the coupling portion 44 may extend perpendicularly to the lead portion 42. The coupling portion 44 may extend from one side of the lead portion 42 in the height direction (Y-axis direction).

Accordingly, the corresponding coupling portion 34 of the electrode tab 30 may be easily coupled to the coupling portion 44. A location where the coupling portion 44 is extended from the lead portion 42 or an angle between the lead portion 42 and the coupling portion 44 may be properly changed as needed.

In this instance, the coupling portion 44 may extend in the length direction of the electrode assembly 20 (Y-axis direction). The coupling portion 44 may extend parallel to an inner wall 13 of the case 10. The coupling portion 44 may have a support surface 45 on one side thereof. The support surface 45 may face the inner wall 13 of the case 10.

In this embodiment, the support surface 45 may be supported in contact with the inner wall 13. If necessary, a predetermined bonding layer may be present between the support surface 45 and the inner wall 13. The bonding layer may be formed by melting a resin layer present on the outer surface of the case 10, or may be formed from an adhesive. Although FIG. 3 shows that the support surface 45 and the inner wall 13 are somewhat spaced apart from each other, this is provided by way of illustration.

As described above, in this embodiment, the coupling portion 44 may provide an area for the coupling of the electrode tab 30 and structural stability to properly place the electrode lead 40 in the accommodation space S.

This is because the exposed lead portion 42 through the window 11 provides an insufficient space for the coupling of the electrode tab 30 and does not provide enough support to stably place the electrode lead 40 in the accommodation space S.

Meanwhile, in this embodiment, an end of the coupling portion 44 may face one side of the electrode assembly 20 in the length direction (Y-axis direction). The length (L) of the coupling portion 44 may be smaller than the distance (d1) between the electrode assembly 20 and the lead portion 42.

This configuration may be intended to provide a sufficient space where the electrode tab 30 is occupied and coupled to the electrode lead 40, between the electrode assembly 20 and the lead portion 42. This space may allow for the placement of the electrode tab 30 extending from one side of the electrode assembly 20 in the length direction (Y-axis direction).

Further, by the above-described configuration, the electrode lead 40 may be disposed within the electrode assembly 20 in the stack direction (Z-axis direction). In other words, the electrode lead 40 may not extend beyond the electrode assembly 20 in the stack direction (Z-axis direction). This may reduce the thickness of the secondary battery 1, thereby improving energy density.

Hereinafter, a secondary battery according to another embodiment of the present disclosure will be described.

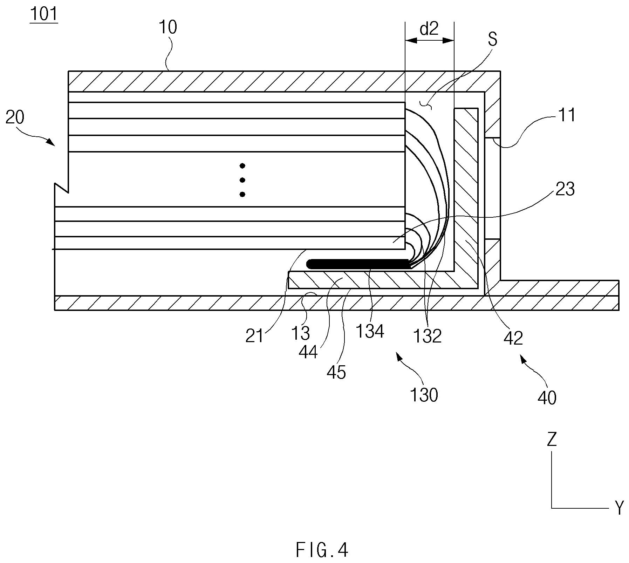

The secondary battery according to another embodiment of the present disclosure will be described based on differences from the above-described secondary battery according to an embodiment of the present disclosure. FIG. 4 is a cross-sectional view of the secondary battery according to another embodiment of the present disclosure, taken along the line I-I of FIG. 1.

FIG. 4 shows the secondary battery according to another embodiment of the present disclosure. Referring to FIGS. 2 and 4, the electrode assembly 20 of the secondary battery 101 according to another embodiment of the present disclosure may include an outer surface 21.

In this embodiment, the outer surface 21 may be present on one side of the electrode assembly 20 in the stack direction (Z-axis direction). The outer surface 21 may face away from the electrode assembly 20. As shown in the drawings, the outer surface 21 may be present on bottom of the electrode assembly 20 and face downwards (negative direction of the Z-axis).

In this instance, in this embodiment, the length (L) of the coupling portion 44 may be greater than the distance (d2) between the electrode assembly 20 and the lead portion 42. The coupling portion 44 may extend over the outer surface 21.

Accordingly, a part of the end portion of the coupling portion 44 may overlap the outer surface 21 in the stack direction (Z-axis direction). The part of the coupling portion 44 may face the outer surface 21. In addition, an edge 23 of the electrode assembly 20 may be covered by the electrode lead 40. Here, the edge 23 may be an edge on one side of the electrode assembly 20 in the length direction (Y-axis direction).

In this instance, in this embodiment, the extension portion 132 of the electrode tab 130 may extend from one side of the electrode assembly 20 in the length direction (Y-axis direction) and bend toward between the coupling portion 44 and the outer surface 21. The extension portion 132 may be disposed between the lead portion 42 and one side of the electrode assembly 20.

Additionally, in this embodiment, the corresponding coupling portion 134 of the electrode tab 130 may be located between the outer surface 21 and the coupling portion 44. Describing in another word, at least a part of the corresponding coupling portion 134 may overlap the outer surface 21 and the coupling portion 44 in the stack direction (Z-axis direction).

By this configuration, the electrode assembly 20 and the electrode lead 40 are disposed together within the accommodation space S, but the lead portion 42 and the electrode assembly 20 may be located as close to each other as possible. Accordingly, the length of the secondary battery 101 may be minimized as much as possible, thereby improving energy density.

Meanwhile, this embodiment describes that the extension portion 132 of the electrode tab 130 extends from one side of the electrode assembly 20 in the length direction (Y-axis direction) and bends toward between the outer surface 21 and the coupling portion 44.

However, the location where the extension portion 132 is extended from the electrode assembly 20 is not limited to a particular location. For example, the extension portion 132 may extend from one side of the electrode assembly 20 in the width direction (X-axis direction) and bend toward between the outer surface 21 and the coupling portion 44.

Hereinafter, a battery pack according to an embodiment of the present disclosure will be described.

The battery pack according to an embodiment of the present disclosure may include at least one secondary battery and a packaging accommodating the secondary battery. In this case, the secondary battery may be the above-described secondary battery according to an embodiment of the present disclosure.

In this embodiment, the shape or structure of the packaging may be properly changed. For example, the packaging may include a plurality of plates or frames disposed around the secondary batteries, but is not limited thereto.

Meanwhile, other components for perform specific functions may be installed in the packaging. For example, a busbar may be installed in the packaging to conduct electricity from the secondary battery to the external device. Alternatively, a vent plug may be installed in the packaging to connect the inside and outside of the packing.

Although the present disclosure has been hereinabove described with regard to a certain number of embodiments and drawings, the present disclosure is not limited thereto, and may be embodied in many different forms within the scope of the technical aspects of the present disclosure and the appended claims and their equivalents by persons having ordinary skill in the technical field pertaining to the present disclosure.

**[List of Reference Numerals]**

| | | | |
|---|---|---|---|
| 1, 101: | Secondary battery | 10: | Case |
| 11: | Window | 13: | Inner wall |
| 20: | Electrode assembly | 21: | Outer surface |
| 23: | Edge | 30, 130: | Electrode tab |
| 32, 132: | Extension portion | 34, 134: | Corresponding coupling portion |
| 40: | Electrode lead | 42: | Lead portion |
| 44: | Coupling portion | 45: | Support surface |
| S: | Accommodation space | | |

## Claims

1. A secondary battery comprising:
an electrode assembly including a plurality of electrodes and a separator stacked on each other;
an electrode tab extending from the electrode;
a case accommodating the electrode assembly and having a window in an outer surface; and
an electrode lead disposed in the case, wherein at least a part of the electrode lead is exposed through the window to conduct electricity from the electrode assembly to outside,
wherein the electrode lead includes:
a lead portion extending in a stack direction of the plurality of electrodes at one side of the electrode assembly; and
a coupling portion extending from the lead portion and to which the electrode tab is coupled.

2. The secondary battery according to claim 1,
wherein the coupling portion extends at an angle with respect to the lead portion or perpendicularly to the lead portion.

3. The secondary battery according to claim 2,
wherein the electrode assembly has a predetermined length in a direction perpendicular to the stack direction,
wherein the lead portion is located at one side of the electrode assembly in a length direction, and
wherein the coupling portion extends in the length direction of the electrode assembly.

4. The secondary battery according to claim 3,
wherein the coupling portion extends toward the electrode assembly.

5. The secondary battery according to claim 3,
wherein an end of the coupling portion faces said one side of the electrode assembly.

6. The secondary battery according to claim 5,
wherein a length (L) of the coupling portion is smaller than or equal to a distance (d1) between the lead portion and the electrode assembly, and
wherein the electrode tab includes:
an extension portion extending toward the lead portion; and
a corresponding coupling portion present at an end of the extension portion and coupled to the coupling portion.

7. The secondary battery according to claim 3,
wherein the electrode assembly includes an outer surface present on one side in the stack direction, the outer surface facing outwards, and
wherein the coupling portion extends over the outer surface.

8. The secondary battery according to claim 7,
wherein at least a part of the coupling portion overlaps the outer surface in the stack direction.

9. The secondary battery according to claim 7,
wherein a length (L) of the coupling portion is greater than a distance (d2) between the lead portion and the electrode assembly.

10. The secondary battery according to claim 7,
wherein the electrode assembly includes an edge present at said one side in the length direction, and
wherein the electrode lead covers the edge.

11. The secondary battery according to claim 7,
wherein the electrode tab includes:
an extension portion extending toward the coupling portion; and
a corresponding coupling portion present at an end of the extension portion and coupled to the coupling portion.

12. The secondary battery according to claim 11,
wherein the corresponding coupling portion is located between the outer surface and the coupling portion.

13. The secondary battery according to claim 11,
wherein the extension portion is located between said one side of the electrode assembly and the lead portion.

14. The secondary battery according to claim 11,
wherein the extension portion has a bent shape toward between the outer surface and the coupling portion.

15. The secondary battery according to claim 1,
wherein one surface of the lead portion is exposed to outside of the case through the window.

16. The secondary battery according to claim 15,
wherein the lead portion has a larger area than the window.

17. The secondary battery according to claim 16,
wherein the window has a first height (h1) in the stack direction,
wherein the lead portion has a second height (h2) in the stack direction, and
wherein the second height (h2) is larger than the first height (h1).

18. The secondary battery according to claim 15,
wherein the window has a first width (w1) in a direction parallel to a width of the electrode,
wherein the lead portion has a second width (w2) in the direction parallel to the width of the electrode, and
wherein the second width (w2) is larger than the first width (w1).

19. The secondary battery according to claim 1,
wherein the coupling portion extends parallel to an inner wall of the case so as to be supported by the inner wall.

20. A battery pack comprising:
at least one secondary battery; and
a packaging accommodating the secondary battery,
wherein the secondary battery includes:
an electrode tab extending from an electrode;
a case accommodating an electrode assembly and having a window in an outer surface; and
an electrode lead disposed in the case, wherein at least a part of the electrode lead is exposed through the window to conduct electricity from the electrode assembly to outside, and
wherein the electrode lead includes:
a lead portion extending in a stack direction of the plurality of electrodes at one side of the electrode assembly; and
a coupling portion extending from the lead portion and to which the electrode tab is coupled.
